# EUROPEAN PATENT SPECIFICATION

(11) **EP 0 550 978 B1**
(45) Date of publication and mention of the grant of the patent: **16.06.1999**
(21) Application number: 92311409.4
(22) Date of filing: 14.12.1992
(51) Int. Cl.: G11B 25/04, G11B 21/02, G11B 19/20, G11B 21/12, G11B 21/22

(54) **Miniature hard disc drive system**
Miniaturfestplattenantriebsanlage
Système d'entraînement de disque dur miniature

(30) Priority: 12.12.1991 US 807793
(43) Date of publication of application: 14.07.1993
(73) Proprietor: SEAGATE TECHNOLOGY INTERNATIONAL, Georgetown Grand Cayman Island (KY)
(72) Inventor: Battu, Ramgopal, Canoga Park, California 91306 (US); Jabbari, Iraj, San Jose, California 95125 (US)
(74) Representative: Kenyon, Sarah Elizabeth

(56) References cited:
- EP-A- 341 957
- EP-A- 467 556
- EP-A- 490 069
- WO-A-88/01780
- WO-A-89/08313
- DE-A- 2 526 256
- US-A- 4 855 853
- US-A- 4 988 904
- US-A- 5 038 240
- PATENT ABSTRACTS OF JAPAN vol. 9, no. 144 (P-365)19 June 1985 & JP-A-60 022 781 ( HITACHI SEISAKUSHO K.K. ) 5 February 1985

## Description

The present invention is directed generally to the field of hard disc drives, and more particularly to miniature Winchester-type hard disc drive systems.

With the rapidly expanding development of personal computers into the field of first what were termed portable, then lap-top, and now notebook size computers, there has been a tremendous demand for maintaining the performance of the disc drive systems of such computers. The major development in this direction has been the development of smaller winchester-type disc drives as replacements and enhancements to floppy disc drives for program storage. An example of this can be found in US patent number 4,819,110 by Yoshioka. The Winchester disc drive, in general, provides higher capacities and faster speeds of operation: factors which are of great importance for the effective use of personal computers running advanced software packages.

The Winchester-type disc drives that have been developed for the personal computer market were initially based on the use of hard discs of a diameter of approximately 0.133m (5.25 inches) and known as 5¼ inch discs. Many of these disc drives used stepper motors for positioning a transducer over a selected track on the rotating disc, although larger capacity systems typically used voice coil motors. The next step in reduction of size of the disc drive was to cut the "form factor" (the dimensions of the external case for the complete disc drive) by one half, so that the resulting disc drive used a platter of 0.08m (3.5 inch) diameter and known as 3½ inch discs. The height of the disc drive was also becoming a significant factor, and efforts were made to reduce the height of the disc drive as well, so that the size of the casing for the personal computer could be minimised. However, as to most lap-top and notebook computers, hard disc drives continue to be external devices.

US patent number 4,855,853 discloses a disc drive apparatus comprising a voice coil motor within a housing wherein two permanent magnets are secured in opposing relationship to an iron plate which is fixed to the housing base. The height of the disc drive is therefore affected by the iron plate fixed to the housing base.

US patent number 4,988,904 discloses a disc drive apparatus comprising a voice coil motor, within a housing wherein two permanent magnets are both directly secured on the base of the housing.

It is an object of the present invention to provide a compact hard disc drive system having reduced length, width and height dimensions.

Another object of the invention is to provide a compact hard disc drive system which may be inserted and removed from the computer, both to maximise the effectiveness of the disc drive and provide additional storage capacity by interchanging disc drives, as well as to provide security for the information stored on the disc drive.

A further object of the present invention is to provide a disc drive which is compatible with the reduced power budget available in a battery-operated portable computer. Typically, portable computers only provide 5V DC, which must be capable of providing sufficient power both to maintain the disc spinning at a constant speed, and powering the motor of the head arm actuator to selectively position the head over a track on the disc and maintain the head position over the target track on the disc.

Another object of the present invention is to utilise a voice coil motor design which is extremely compact yet capable of reliable positioning of the transducer supporting actuator arm relative to the disc on a long-term basis.

Yet another object of the present invention is to provide quick connect/interconnect capability on the outer portions of the head disc assembly to provide a simply-connected interface to the drive control electronics.

According to the present invention there is provided a disc drive comprising:
at least one hard disc;
means for supporting the or each hard disc and for rotating the or each hard disc at a constant speed;
transducer means for writing to and reading from digital information from the or each hard disc;
means for selectively positioning the or each transducer means with respect to a respective disc, said positioning means comprising a voice coil motor with a rotor and stators; characterised in that said stators are mounted on the ceiling and base of a housing in which the said or each disc, supporting means, transducer means and positioning means are disposed.

The compact Winchester-type disc drive of the present invention was specifically designed to provide a system which will meet the demands of notebook and lap-top size and type computer systems. In a preferred embodiment, the rotating disc dimensions will be 15mm inside diameter and 45mm outside diameter.

In the preferred embodiment of the present invention, two hard discs will be provided, although a single hard disc design may also be used. Storage on each disc in excess of 5 megabytes once the discs are formatted is provided. An actuator system supports two read/write heads for each disc, one head positioned on each side of the disc, to write digital information on and read digital information from the disc. A positioning mechanism is provided to move the transducer between the tracks on the discs and for holding the transducer accurately positioned over each track to write information on and read information from the disc.

In a preferred embodiment of the present invention, the actuator includes a rotary voice coil motor, which is arranged to move the transducer along a path extending in an approximately radial direction with respect to the hard disc to move the transducer selectively to any track between the inner diameter of 15mm and the outer diameter of 45 mm.

Means will be provided for lifting the heads from the disc, comprising either a shape memory metal withdrawal system or a ramp system combined with a head rest area adjacent the outer diameter of the disc in order to provide a very high resistance to non-operating shocks.

By incorporating the features generally outlined above and to be described in further detail below, a disc drive having an overall outer dimension of about 70mm by about 50mm, with a thickness of 10mm can be achieved, wherein the disc inner diameter is 15mm and outer diameter is 45mm. In this way, a highly compact, easily inserted and removable disc drive is achieved.

Embodiments of the present invention will now be described with reference to the accompanying drawings, of which:
FIG 1 is a top plan view of the disc drive of a preferred embodiment of the present invention;
FIGS 2A and 2B are sectional views of the disc drive of FIG 1; and
FIG 3 is a sectional view of an alternative moving voice coil actuator.

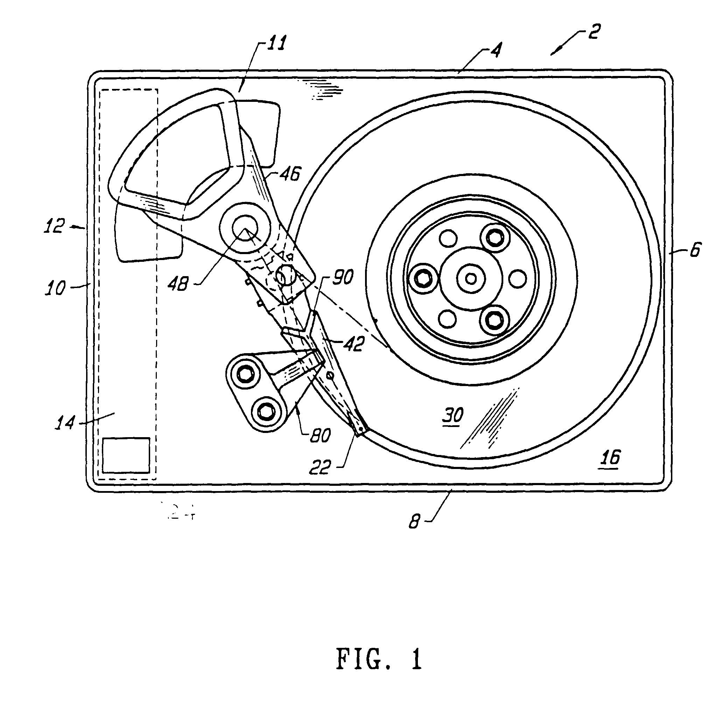

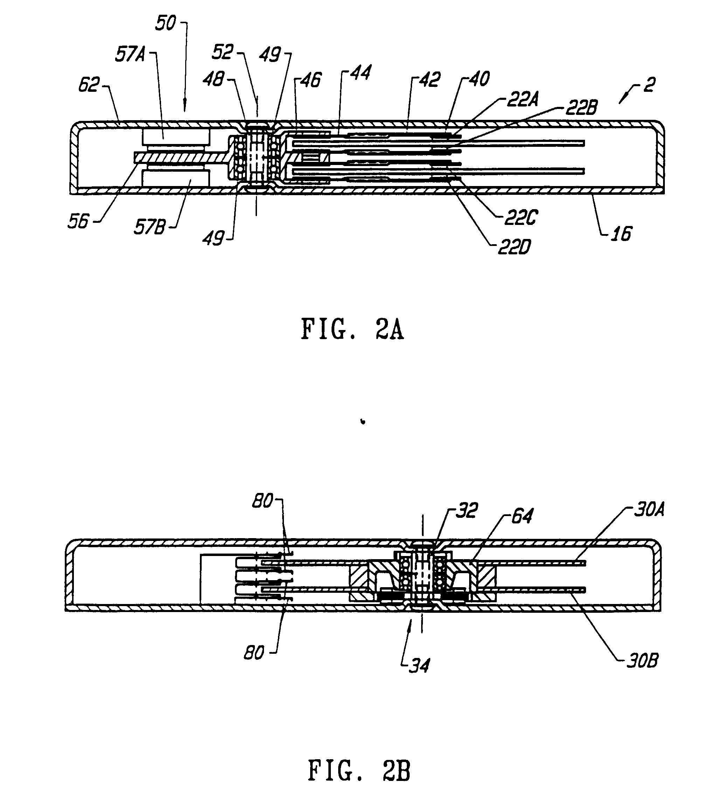

The preferred embodiment of the compact Winchester disc drive is shown in a top plan view, with the cover removed, in FIG 1 and in a vertical sectional view in FIG 2. In this figure and in FIG 2, like components are designated by like reference numerals.

Referring first to FIG 1, the major elements of the compact disc drive of the present invention are shown, including a housing 2 which includes upright walls 4, 6, 8, and 10. It is anticipated that the housing may be slid into a slot provided within the computer for the disc drive system. In order to minimise the electronics which must be provided on this very small disc drive, an external connector generally indicated at 12 is provided on the housing wall to the rear of motor 11. A second connector 14 may be provided on the bottom surface 16 of the disc drive to provide additional electrical connections from the disc drive to the electronics which are in turn supported within the computer.

By providing the electrical connectors 12, 14 immediately adjacent the voice coil motor 11 and the leads which run back from the transducer 22, the length of the runs of the wires is minimised. This is important especially with respect to the wire length from the external interconnect 12, 14 to the transducer 22 because the signals picked up from the transducer 22 are relatively weak. In order to amplify these signals, an internal preamplifier 24 may be provided mounted on the baseplate 16 of the housing 2. In this way, the signals picked up from the transducer receive sufficient amplification to be accurately replicated after being transferred over the connecting interfaces 12, 14 to the electronics incorporated in the computer.

The drive is mounted in a hard case without external shock mounts. It is anticipated that to accommodate the minimal size of the disc drive, an appropriate mount can be incorporated into the lap-top or notebook size computer with which this disc drive is especially intended to work.

The disc drive system designed in accordance with the preferred embodiment of this invention is a microprocessor-based device which moves the transducer 22 from track to track across the surface of the disc 30 in response to commands received by the microprocessor from the host system on the computer by way of a disc drive controller. The disc drive controller and microprocessor of the present invention are not shown herein, and would be mounted externally to the disc drive and connected by the interface 12 or 14 to the disc drive in order to minimise the parts count supported on the disc drive. Alternatively, certain critical electronic elements of the present invention may be supported from the base 16 of the disc drive internally or externally, provided appropriate shock damping and thermal isolation is utilised.

Turning to FIG 2, each disc 30A, 30B is mounted within the housing and on the hub of a spindle 32 supported on a spindle motor 34. Each of the discs has an inner diameter of about 15mm and an outer diameter of about 45mm, and is from 0.51 mm (.020 inch) to 0.64 mm (.025 inch) thick. Transducers 22A, B, C, D are provided for reading and writing on both surfaces of each disc. The transducers 22 in this preferred embodiment comprise MR heads of the type made by PCI Components, Inc. of Minneapolis, Minnesota, and as described in U.S. Patent No. 4 891 725, issued on 2nd January 1990, and assigned to the assignee of the present invention.

Each read/write head 22 is mounted on a gimble 40 mounted at one end of a flexure 42, the gimble supporting 70 percent of normal length flexure/gimble/suspension and 50 to 70 percent of normal length slider 42.

The supported end 44 of each flexure 42 is fastened to an arm 46 which is rotated about a pivot 48 by a voice coil motor 50. The flexure 42 and arm 46 are arranged to provide a straight arm extending from the voice coil motor out to the disc in accordance with the teachings of the U.S. Patent No. 4,620,261, in the name of Gitzendammer but assigned to the assignee of the present invention. The supporting arm 46 is supported at the pivot 48 on a steel shaft fixed to the races of a pair of ball bearings 49 which are in turn located in the base 16 of the housing 2. The shaft 48 rotates about the axis 52 to quickly and reliably alter the position of the transducers 22A-D relative to the tracks on the disc.

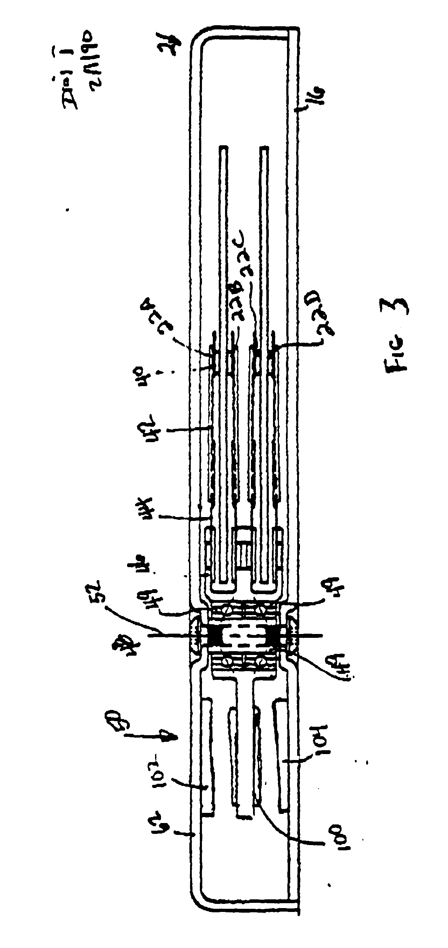

In this preferred embodiment the voice coil motor 50 comprises a single moving magnet 56 supported on the distal end of the arms 46 from the flexures 42. The single moving magnet 56 includes a backarm which serves as a balancing counterweight. The magnet is movable between two coils 57A, B supported above and below. Alternatively, as shown in FIG 3 a coil 100 may be supported on the distal end of the arm 46, movable with selective application of current to the coil 100 causing magnetic flux which interacts with the magnetic flux of the upper 102 and lower 104 magnets. In this instance, one of the magnets 104 may be supported from the base casting 16 of the housing, with the other magnet 102 being supported from the upper portion 62 (FIG 3) of the housing. Referring next to FIG 2B, the voice coil motor 34 is clearly shown being an in-hub spindle motor which supports the disc on the outer rotating hub 64. To minimise the height of the motor, Hall-less driving circuits of the type disclosed in US Patent No. 5 001 450 by A. Cassat, issued on 19th March 1991, are incorporated in the motor to determine its position and appropriately drive it in the correct direction.

Referring to both FIG 1 and FIG 2B, it is important to note that in order to maximise the ability of the system to handle shocks of up to 100 to 150 g's for portable applications, the system is designed to provide for landing the head gimble array on a separate area or ramp 80 adjacent the rotating disc, rather than allowing the head to rest on the disc as in most known smaller disc drives. One approach to achieving this goal is to use a shape memory metal head gimble assembly head lifting wire of the type disclosed in U.S. Patent No. 4 996 617, issued on 26th February 1991 (incorporated herein by reference), assigned to the assignee of this invention. In this assembly, a wire would extend down the centreline of the flexure 42 and be attached to a point on the flexure, the wire being shortened in length in response to application of a current to cause the bending of the flexure 42 and to lift the flexure up off the rotating disc surface. Alternatively, an inclined ramp 80 may be utilised co-operating with the flexure 42 and a cam member incorporated as a ridge 90 in flexure 42 so that the flexure and head gimble assembly as it moves horizontally relative to the disc and reaches the edge of the disc, is lifted above the disc unloading the head from the disc even in the absence of rotation of the disc.

The foregoing description of the present invention may be embodied in other specific forms without departing from the scope of the present invention. The preferred embodiment is presented merely as illustrative and it is not intended that the present invention be limited to the specific example described above and shown in the attached figures.

It is believed that by using the combination of features described above, that a compact disc drive having dimensions of approximately 50mm by 70mm by 10 to 19mm high can be achieved which can be driven with only a 5V DC power supply. A sufficient capacity of 10 megabytes or more data storage can be achieved on a 15mm inside diameter by 45mm outside diameter by 0.51 - 0.64 mm (0.020-.025 inch) thick disc, and reliable positioning of the head relative to the disc can be achieved. The remaining critical dimensions which can be achieved by the novel combination of design features described above is listed below.

| | |
|---|---|
| pivot/gap | = 26.4mm (1.040 inches) |
| pivot/head | = 26.6mm (1.046 inches) |
| gap/head | = 0.71mm (0.028 inches) |
| pivot/centre | = 27.5mm (1.082 inches) |
| Number of Tracks per Disc | = 700 |
| Read Angle | = 0.840 |
| Read Angle for the last Track | = 0.495 |
| RPM | = 3000 |

## Claims

1. A disc drive comprising:
at least one hard disc (30);
means (34) for supporting the or each hard disc and for rotating the or each hard disc at a constant speed;
transducer means (22A, B, C, D) for writing to and reading from digital information from the or each hard disc;
means (40-57) for selectively positioning the or each transducer means with respect to a respective disc, said positioning means comprising an actuator arm (46) rotatable about a pivot (48) having said transducer means on one side of the pivot and a voice coil motor (50) on the other side of the pivot, said voice coil motor (50) having a rotor (56) and stators (57A, 57B); characterised in that said voice coil motor (50) has a compact design having reduced thickness in which said stators (57A, 57B) are mounted directly to the ceiling (62) and base (16) of a housing (2) in which the said or each disc, supporting means, transducer means and positioning means are disposed, and are contained entirely within said housing (2), so that the overall external thickness of said housing in a direction parallel to said pivot (48) in the region containing said voice coil motor (5) is substantially the combined thickness of only said stators (57A, 57B), said rotor (56), said housing ceiling (62), said housing base (16), and air gaps between said stators and said rotor, and are between approximately 10 mm and approximately 19 mm.

2. A disc drive as claimed in claim 1, in which said rotor comprises a single selectively energised coil and said stators comprise first and second magnets.

3. A disc drive as claimed in claim 1, in which said rotor comprises a magnet and said stators comprise first and second voice coils.

4. A disc drive as claimed in any one of the preceding claims, in which said combined thicknesses of said stators (57A, 57B), said rotor (56), said housing ceiling (62), said housing base (16), and air gaps between said stators and said rotor is between approximately 10 mm and approximately 19 mm such that said housing has a maximum thickness of between approximately 10 mm and approximately 19 mm in a region of said disc drive containing said voice coil motor (50).

5. A disc drive as claimed in any one of the preceding claims, in which said housing base and ceiling are substantially planar and wherein said housing base and said housing ceiling each have substantially constant thickness in the region occupied by said voice coil motor.

6. A disc drive as claimed in any one of the preceding claims, in which said housing includes at least one connector (12, 14) for coupling said disc drive to a computer.

7. A disc drive as claimed in claim 7, in which said connector extends from said housing proximate the voice motor in order to minimise the electrical path from said transducer to said computer.

8. A disc drive as claimed in claim 7 or 8, further comprising a pre-amplifier (24) coupled to said transducer means and at least one said connector.

9. A disc drive as claimed in any one of the preceding claims, in which said positioning means further includes at least one flexure (42) each coupled to a respective transducer means and means (80, 90) for lifting each transducer means from the disc.

10. A disc drive as claimed in claim 10, in which said lifting means comprises a ridge extending the length of said flexure functioning as a cam (90) co-operating with a ramp (80) located at the side of the or each disc so as to lift the associated transducer as the transducer is moved to the side of the respective disc.

11. A disc drive as claimed in claim 10 when dependent on claim 4, in which said lifting means comprises a shape memory metal element extending along the flexure and attached thereto, attached to said actuator arm and being responsive to the application of current so as to change its state and bend the flexure thereby lifting the transducer means.

12. A disc drive as claimed in claim 12, further comprising a transducer rest area located at the side of the or each disc and said positioning means moves the or each transducer means to said rest area when said disc drive is not in use.

13. A computer including a disc drive (2) as claimed in any one of the preceding claims.

14. A computer as claimed in claim 14 when dependent upon claim 7, further comprising at least one host connector attached to said computer for coupling to the or each respective connector of said disc drive; one or more shock mounts for mounting said disc drive in said computer; and a disc drive controller coupled to said host connector for controlling the disc drive.

15. A disc drive as claimed in any one of the preceding claims, in which said positioning means further includes at least one flexure (42) each coupled to a respective transducer means, wherein said flexure is a 70 percent flexure/gimbal/suspension, and wherein the or each disc has an outer diameter sized to fit within a housing having dimensions of about 70 mm long by 50 mm wide.

## Patentansprüche

1. Plattenlaufwerk mit:
zumindest einer Festplatte (30),
Einrichtungen (34) zur Halterung der oder jeder Festplatte und zum Drehen der oder jeder Festplatte mit einer konstanten Drehzahl,
Wandlereinrichtungen (22A,B,C,D) zum Schreiben und Lesen digitaler Informationen auf und von der oder jeder Festplatte,
Einrichtungen (50-57) zum selektiven Positionieren des oder jeder Wandlereinrichtung bezüglich einer jeweiligen Platte, wobei die Positioniereinrichtungen einen Stellgliedarm (46) umfassen, der um einen Schwenkpunkt (48) drehbar ist, wobei die Wandlereinrichtung auf einer Seite des Schwenkpunktes und ein Schwingspulenmotor (50) auf der anderen Seite des Schwenkpunktes angeordnet ist, wobei der Schwingspulenmotor (50) einen Rotor (56) und Statoren (57A,57B) aufweist,
dadurch gekennzeichnet, daß der Schwingspulenmotor (50) eine kompakte Konstruktion mit verringerter Dicke aufweist, bei der die Statoren (57A,57B) direkt an dem Abdeckteil (62) und einem Basisteil (16) des Gehäuses (2) befestigt sind, in dem die oder jede Platte, die Halterungseinrichtungen, die Wandlereinrichtungen und die Positioniereinrichtungen angeordnet und vollständig in dem Gehäuse (2) enthalten sind, so daß die gesamte Außendicke des Gehäuses in einer Richtung parallel zu dem Schwenkpunkt (48) in dem den Schwenkspulenmotor (5) enthaltenden Bereich im wesentlichen die kombinierte Dicke von lediglich den Statoren (57A,57B), des Rotors (56), der Gehäuse-abdeckung (62), des Gehäuse-Basisteils (169 und der Luftspalte zwischen den Statoren und den Rotoren ist und zwischen ungefähr 10 mm und ungefähr 19 mm liegt.

2. Plattenlaufwerk nach Anspruch 1, bei dem der Rotor eine einzige selektiv angesteuerte Wicklung umfaßt und die Statoren erste und zweite Magneten umfassen.

3. Plattenlaufwerk nach Anspruch 1, bei dem der Rotor einen Magneten umfaßt und die Statoren erste und zweite Schwingspulen umfassen.

4. Plattenlaufwerk nach einem der vorhergehenden Ansprüche, bei dem die kombinierte Dicke der Statoren (57A,57B) des Rotors (56), der Gehäuse-Abdeckung (62), des Gehäuse-Basisteils (16) und der Luftspalte zwischen den Statoren und dem Rotor zwischen ungefähr 10 mm und ungefähr 19 mm derart liegt, daß das Gehäuse eine maximale Dicke von zwischen ungefähr 10 mm und ungefähr 19 mm in einem den Schwingspulenmotor (50) enthaltenen Bereich des Plattenlaufwerks aufweist.

5. Plattenlaufwerk nach einem der vorhergehenden Ansprüche, bei dem das Gehäuse-Basisteil und das Abdeckteil im wesentlichen eben sind, und bei dem das Gehäuse-Basisteil und das Gehäuse-Abdeckteil jeweils eine im wesentlichen konstante Dicke in dem Bereich aufweisen, der von dem Schwingspulenmotor eingenommen ist.

6. Plattenlaufwerk nach einem der vorhergehenden Ansprüche, bei dem das Gehäuse zumindest eine Verbindungseinrichtung (12, 14) zum Koppeln des Plattenlaufwerks mit einem Computer einschließt.

7. Plattenlaufwerk nach Anspruch 6, bei dem sich die Verbindungseinrichtung von dem Gehäuse in der Nähe des Schwingspulenmotors erstreckt, um die elektrische Pfadlänge von dem Wandler zu dem Computer zu einem Minimum zu machen.

8. Plattenlaufwerk nach Anspruch 6 oder 7, das weiterhin einen Vorverstärker (24) aufweist, der mit den Wandlereinrichtungen und zumindest einer Verbindungseinrichtung gekoppelt ist.

9. Plattenlaufwerk nach einem der vorhergehenden Ansprüche, bei dem die Positioniereinrichtung weiterhin zumindest ein Biegeelement (42), das jeweils mit einer jeweiligen Wandlereinrichtung gekoppelt ist, und Einrichtungen (80,90) zum Abheben jeder Wandlereinrichtung von der Platte einschließt.

10. Plattenlaufwerk nach Anspruch 9, bei dem die Abhebeeinrichtung einen Wulst aufweist, der sich über die Länge des Biegeelementes erstreckt und als ein Nocken (90) wirkt, der mit einer Rampe (80) zusammenwirkt, die sich an der Seite der oder jeder Platte befindet, um den zugehörigen Wandler abzuheben, wenn der Wandler zu der Seite der jeweiligen Platte bewegt wird.

11. Plattenlaufwerk nach Anspruch 9 unter Rückbeziehung auf Anspruch 4, bei dem die Abhebeeinrichtung ein ein Formgedächtnis aufweisendes Metallelement aufweist, das sich entlang des Biegeelementes erstreckt und an diesem angebracht ist, an dem Stellgliedarm angebracht ist und auf das Zuführen eines Stromes anspricht, um seinen Zustand zu ändern und das Biegeelement zu biegen, wodurch die Wandlereinrichtung abgehoben wird.

12. Plattenlaufwerk nach Anspruch 11, das weiterhin einen Wandler-Ruhebereich aufweist, der an der Seite der oder jeder Platte liegt, und daß die Positioniereinrichtung die oder jede Wandlereinrichtung zu dem Ruhebereich bewegt, wenn das Plattenlaufwerk nicht in Gebrauch ist.

13. Computer mit einem Plattenlaufwerk (2) nach einem der vorhergehenden Ansprüche.

14. Computer nach Anspruch 13 unter Rückbeziehung nach Anspruch 6, der zumindest eine Hauptcomputer-Verbindungseinrichtung, die an dem Computer angebracht ist, um mit der oder jeder jeweiligen Verbindungseinrichtung des Plattenlaufwerkes gekoppelt zu werden, ein oder mehrere Stoßdämpfungsbefestigungen zur Befestigung des Plattenlaufwerkes in dem Computer, und ein Plattenlaufwerk-Steuergerät umfaßt, das mit der Hauptcomputer-Verindungseinrichtung gekoppelt ist, um das Plattenklaufwerk zu steuern.

15. Plattenlaufwerk nach einem der vorhergehenden Ansprüche, bei dem die Positioniereinrichtung weiterhin zumindest ein Biegeelement (42) einschließt, das jeweils mit einer jeweiligen Wandlereinrichtung gekoppelt ist, wobei das Biegeelement eine 70%-Biegeelement-/Kardan-/Aufhängung ist, und bei dem die oder jede Platte einen Außendurchmesser aufweist, der so bemessen ist, daß er in ein Gehäuse mit Abmessungen von einer Länge von ungefähr 70 mm und einer Breite von 50 mm paßt.

## Revendications

1. Lecteur de disque comprenant :
au moins un disque dur (30) ;
des moyens (34) pour supporter le ou chaque disque dur et pour faire tourner le ou chaque disque dur à une vitesse constante ;
un moyen formant transducteur (22A, B, C, D) pour écrire et lire des informations numériques sur et à partir du ou de chaque disque dur ;
un moyen (40 à 57) pour placer de manière sélective le ou chaque moyen formant transducteur par rapport à un disque respectif, ledit moyen de positionnement comprenant un bras d'actionnement (46) pouvant tourner autour d'un pivot (48) présentant ledit moyen formant transducteur d'un côté du pivot et un moteur à bobine mobile (50) de l'autre côté du pivot, ledit moteur à bobine mobile (50) ayant un rotor (56) et des stators (57A, 57B) ; caractérisé en ce que ledit moteur à bobine mobile (50) présente une structure compacte d'épaisseur réduite dans laquelle lesdits stators (57A, 57B) sont montés directement en contact avec le plafond (62) et la base (16) d'un logement (2) dans lequel sont placés ledit ou chaque disque, moyen de support, moyen formant transducteur et moyen de positionnement, ceux-ci étant entièrement intégrés à l'intérieur dudit logement (2), de telle sorte que l'épaisseur extérieure totale dudit logement dans une direction parallèle audit pivot (48) dans la zone contenant ledit moteur à bobine mobile (5) est sensiblement égale à l'épaisseur combinée seulement desdits stators (57A, 57B), dudit rotor (56), dudit plafond de logement (62), de ladite base de logement (16), et des entrefers entre lesdits stators et ledit rotor, et est comprise entre environ 10 mm et environ 19 mm.

2. Lecteur de disque selon la revendication 1, dans lequel ledit rotor comprend une seule bobine excitée de manière sélective et lesdits stators comprennent des premier et deuxième aimants.

3. Lecteur de disque selon la revendication 1, dans lequel ledit rotor comprend un aimant et lesdits stators comprennent des première et deuxième bobines mobiles.

4. Lecteur de disque selon l'une quelconque des revendications précédentes, dans lequel ladite épaisseur combinée desdits stators (57A, 57B), dudit rotor (56), dudit plafond de logement (62), et de ladite base de logement (16), et lesdits entrefers entre lesdits stators et ledit rotor est comprise entre environ 10 mm et environ 19 mm, de telle sorte que ledit logement présente une épaisseur maximale comprise entre environ 10 mm et environ 19 mm dans une zone dudit lecteur de disque contenant ledit moteur à bobine mobile (50).

5. Lecteur de disque selon l'une quelconque des revendications précédentes, dans lequel ladite base et ledit plafond de logement sont sensiblement plans et dans lequel ladite base de logement et ledit plafond de logement présentent chacun une épaisseur sensiblement constante dans la zone occupée par ledit moteur à bobine mobile.

6. Lecteur de disque selon l'une quelconque des revendications précédentes, dans lequel ledit logement comprend au moins un connecteur (12, 14) pour accoupler ledit lecteur de disque à un ordinateur.

7. Lecteur de disque selon la revendication 7, dans lequel ledit connecteur s'étend dudit logement situé à proximité du moteur à bobine mobile pour minimiser le trajet électrique dudit transducteur audit ordinateur.

8. Lecteur de disque selon la revendication 7 ou 8, comprenant en outre un pré-amplificateur (24) accouplé audit moyen formant transducteur et audit au moins un connecteur.

9. Lecteur de disque selon l'une quelconque des revendications précédentes, dans lequel ledit moyen de positionnement comprend en outre au moins un élément de flexion (42) accouplé à un moyen formant transducteur respectif et des moyens (80, 90) pour soulever chaque moyen formant transducteur du disque.

10. Lecteur de disque selon la revendication 9, dans lequel ledit moyen élévateur comprend une arête s'étendant le long dudit élément de flexion fonctionnant comme une came (90) coopérant avec une rampe (80) située sur le côté du ou de chaque disque de manière à assurer l'élévation du transducteur associé lorsque le transducteur se déplace vers le côté du disque respectif.

11. Lecteur de disque selon la revendication 10 lorsqu'elle dépend de la revendication 4, dans lequel le moyen élévateur comprend un élément métallique à mémoire de forme s'étendant le long de l'élément de flexion et y étant relié, relié audit bras d'actionnement et étant de ce fait sensible à la mise sous tension de manière à modifier son état et courber l'élément de flexion, ce qui entraîne une élévation du moyen formant transducteur.

12. Lecteur de disque selon la revendication 11, comprenant en outre une zone de repos du transducteur située sur le côté du ou de chaque disque et ledit moyen de positionnement déplace le ou chaque moyen formant transducteur vers ladite zone de repos lorsque ledit lecteur de disque n'est pas utilisé.

13. Ordinateur comprenant un lecteur de disque (2) selon l'une des revendications précédentes.

14. Ordinateur selon la revendication 13 lorsqu'elle dépend de la revendication 7, comprenant en outre au moins un connecteur hôte associé audit ordinateur pour s'accoupler au ou à chaque connecteur respectif dudit lecteur de disque ; un ou plusieurs supports élastiques pour monter ledit lecteur de disque dans ledit ordinateur ; et un contrôleur de lecteur de disque accouplé audit connecteur hôte pour commander le lecteur de disque.

15. Lecteur de disque selon l'une quelconque des revendications 1 à 12, dans lequel ledit moyen de positionnement comprend en outre au moins un élément de flexion (42) qui est dans chaque cas accouplé à un moyen formant transducteur respectif, dans lequel ledit élément de flexion est un élément de flexion/suspension à la Cardan/suspension à 70%, et dans lequel le ou chaque disque présente un diamètre extérieur calibré pour s'adapter dans un logement présentant des dimensions d'environ 70 mm de long sur environ 50 mm de large.
